# EUROPEAN PATENT APPLICATION

(11) **EP 4 643 711 A1**
(43) Date of publication of application: **05.11.2025**
(21) Application number: 23910825.1
(22) Date of filing: 28.12.2023
(51) Int. Cl.: A47B 13/02, A47B 9/00, H01R 24/00, H01R 13/02, H01R 31/06

(54) **ELECTRIC CONNECTION STRUCTURE OF ELECTRIC LIFTING TABLE FRAME AND ELECTRIC LIFTING TABLE**

(30) Priority: 30.12.2022 CN 202211712565
(71) Applicant: Changzhou Kaidi Electrical Inc., Changzhou,Jiangsu 213000 (CN)
(72) Inventor: LIU, Tao, hangzhou, Jiangsu 213000 (CN); ZHU, Gengxing, hangzhou, Jiangsu 213000 (CN)
(74) Representative: karo IP
(86) International application number: PCT/CN2023/142726
(87) International publication number: WO 2024/140908

(57) **Abstract**

The present disclosure belongs to the technical field of smart home, and specifically relates to an electric connection structure for an electric lifting desk frame. The structure comprises: a frame supporting a desk top; a plurality of lifting columns connected to the frame and internally provided with electric drive devices; and control units controlling linear motion of the lifting columns. Each lifting column is independently provided with the control unit. The lifting columns are electrically connected through wire harnesses that are pre-installed and concealed within the frame, the wire harnesses being externally connected to a power unit and an operation unit. The present disclosure adopts concealed wiring by arranging the wire harnesses inside the frame, ensuring no exposed wiring after installation of the electric lifting desk, thereby achieving improved aesthetic integrity. The present disclosure also discloses an electric lifting desk comprising the electric lifting desk frame with the aforementioned electric connection structure. During installation of the lifting columns to the frame, electrical connections are simultaneously established, eliminating cumbersome wire harness connection procedures, enhancing installation efficiency, and reducing safety risks.

## Description

### TECHNICAL FIELD

The present disclosure belongs to the technical field of smart home, and specifically relates to an electric connection structure for an electric lifting desk frame and an electric lifting desk.

### BACKGROUND

With the development of the times, lifting desks have become a new trend in modern office. Existing lifting desk products generally consist of a desk top, a desk top frame, lifting columns, baseboard, a control box, a hand-controller, etc.

In existing electric lifting desks, in order to adapt to different desk top sizes, the desk top frame is often made telescopic, and the connecting wire harness also has a relatively long allowance for easy telescoping. Therefore, organizing the wire harness is also time-consuming and labor-intensive. Moreover, most of the wire harnesses are exposed outside the desk top frame, making the area under the entire electric lifting desk unattractive and untidy.

In addition, the desk top frame and the lifting columns are generally fixed with more than 8 screws, which is cumbersome, time-consuming and labor-intensive during installation. Chinese Patent (CN107981540A) discloses a technical scheme for the rapid installation of a desk top frame and lifting columns. It achieves the purpose of rapid installation by interlocking the protruding portion and grooves between them and then locking them with a crank wrench. However, this technical scheme only solves the problem of rapid mechanical installation. The wire harnesses between the lifting columns, the control box, and the hand-controller still need to be manually connected additionally, which requires multiple wiring operations. The process is also relatively cumbersome, and if the wire harnesses are connected incorrectly, safety risks are likely to occur.

### SUMMARY

The purpose of the present disclosure is to overcome the defects in the prior art, such as the wire harnesses being exposed and the troublesome connection of various wire harnesses. It provides an electric connection structure for an electric lifting desk frame, which makes the area under the lifting desk neater and more beautiful, and improves the convenience of the mechanical installation of the lifting desk and the electrical connection of the connecting wire harnesses.

The technical scheme for achieving the purpose of the present disclosure is as follows: An electric connection structure for an electric lifting desk frame comprises a frame supporting a desk top, a plurality of lifting columns connected to the frame and internally provided with an electric drive device, and a control unit for controlling the actions of the lifting columns. The control unit is independently provided inside each of the lifting columns. The lifting columns are electrically connected via a wire harness. The wire harness is installed in a concealed manner within the frame, and the wire harness is connected to an operation unit and/or a power unit.

Further, the wire harness comprises a main connection line and a secondary connection line. The main connection line and the secondary connection line are connected via a connecting member.

Further, the main connection line is further provided with a connection terminal connected to the operation unit.

Further, the frame is a horizontally telescopic frame. The secondary connection line is pre-installed inside the cross beam of the frame. The secondary connection line comprises a straight wire harness, a telescopic spring wire harness and a first connection terminal.

Further, the main connection line is installed inside the longitudinal beam of the frame, and a retaining groove for installing the main connection line is provided on the longitudinal beam.

Further, a metal box is provided on the lifting column. A second connection terminal electrically connected to the control unit is further fixedly provided on the metal box. A first connection terminal adapted to the second connection terminal is provided on the frame. When the lifting column is installed into the frame, the first connection terminal is simultaneously electrically connected to the second connection terminal.

Further, the second connection terminal is provided with a flared guide opening, and the first connection terminal is provided with an alignment guide structure adapted to the guide opening of the second connection terminal.

Further, a notch is provided at one end of the opening of the metal box, and the second connection terminal is snap-fitted into the notch.

Further, the frame comprises two sets of cross beams. A fixing base for fixing the first connection terminal is provided on the inner side wall at one end of the cross beam. The fixing base has an L-shaped structure. A slot opening is opened in the middle of the vertical wall of the fixing base. Protruding portions are formed by extending inwards along the cross beam direction on both sides of the upper edge of the slot opening. A slot adapted to the protruding portion is provided on the outer side wall of the first connection terminal.

Further, a fixing support is provided on the metal box. The control unit is fixedly installed inside the metal box through the fixing support, and the control unit is electrically connected to the second connection terminal.

Further, the frame comprises two cross beams arranged in parallel, a connecting member snap-fitted between the two cross beams, and a connecting member snap-fitted at the ends of the two cross beams. The connecting member detachably fixes the two cross beams together.

Further, a first snap-fit portion adapted to the size of the cross beam is provided on the connecting member. A first undercut is further formed to protrude on the outer vertical wall of the first snap-fit portion of the connecting member. A retaining groove adapted to the first undercut is provided on the outer side wall of the cross beam.

Further, the width of the first snap-fit portion is greater than the width of the cross beam, and a locking insert is provided between the first snap-fit portion and the cross beam.

Further, the locking insert is provided with a second undercut, and a snap-fit adapted to the second undercut is provided on the connecting member.

Further, the operation unit connected to the wire harness is a hand - controller, and the operation unit is provided with a connection socket connected to the wire harness and a power connection port.

Further, a switch capable of cutting off the power supply of the operation unit is provided at the bottom of the operation unit.

An electric lifting desk comprises the electric connection structure for an electric lifting desk frame of the above-mentioned technical scheme.

After adopting the above-mentioned technical scheme, the present disclosure has the following positive effects:
(1) In the present disclosure, the wire harness of the electric lifting desk is installed and hidden inside the frame of the lifting desk, which makes the desk frame more beautiful after installation, reduces the exposure of the wire harness, and improves the aesthetic appearance of the product.
(2) In the present disclosure, the second connection terminal in the electrical connection is fixed on the lifting column, and the first connection terminal in the electrical connection is fixedly installed on the frame. When the lifting column and the lifting desk frame are installed, the first connection terminal and the second connection terminal are electrically connected simultaneously. This avoids the cumbersome process of additional electrical connection, reduces the installation steps, and improves the installation efficiency and safety.
(3) The present disclosure does not require the use of screws and can complete the assembly of the frame and the lifting column without tools. It reduces the manufacturing difficulty and cost, avoids the poor perpendicularity between the column and the mounting bracket caused by welding deformation, and improves the product quality. At the same time, the detachable frame helps to reduce the packaging volume and cost, and also reduces the transportation cost. The connecting member strengthens the cross beam assembly, reduces the requirements for the material and thickness of the cross beam assembly, and reduces the material cost.
(4) In the present disclosure, the control unit can be integrated inside the lifting column, eliminating the need for a control box. This not only reduces the production cost of the control box but also removes the control box under the desk, avoids external wiring harnesses, and improves the aesthetic appearance of the electric lifting desk.

### DESCRIPTION OF THE DRAWINGS

In order to make the content of the present disclosure more clearly understood, the present disclosure will be described in further detail below with reference to specific embodiments and the accompanying drawings, wherein:
FIG. 1 is an overall structural schematic diagram of the present disclosure.
FIG. 2 is a wire harness structural schematic diagram of the present disclosure.
FIG. 3 is a mounting diagram of the lifting column and frame of the present disclosure.
FIG. 4 is a diagram showing the shapes and details of the first connection terminal and the second connection terminal of the present disclosure.
FIG. 5 is a mounting diagram of the lifting column and second connection terminal of the present disclosure.
FIG. 6 is an assembly diagram of the first connection terminal of the wire harness of the present disclosure.
FIG. 7 is a schematic diagram of the installation of the first connection terminal of the wire harness on the frame of the present disclosure.
FIG. 8 is an assembly diagram of the lifting column and the frame of the present disclosure.
FIG. 9 is a schematic diagram of the control unit inside the lifting column of the present disclosure.
FIG. 10 is a mounting diagram of the frame of the present disclosure.
FIG. 11 is a detailed diagram of the connecting member of the present disclosure.
FIG. 12 is a detailed diagram of the cross beam of the present disclosure.
FIG. 13 is a detailed diagram of the locking insert of the present disclosure.
FIG. 14 is one of the schematic diagrams of the hand-controller of the present disclosure.
FIG. 15 is the second schematic diagram of the hand-controller of the present disclosure.
FIG. 16 is the first mounting diagram of the lifting column and frame of the present disclosure.
FIG. 17 is the second mounting diagram of the lifting column and frame of the present disclosure.

100: Frame; 101: Cross beam; 101a: Retaining groove; 101b: Inclined slot; 101b-1: Inclined slot inclined surface; 101b-2: Inclined slot straight surface; 101b-3: Inclined slot notch; 102: Fixing base; 103: Connecting member; 103a: First snap-fit portion; 103b: First undercut; 103c: Snap-fit; 105: Locking insert; 106: Longitudinal beam;
200: Lifting column; 201: Metal box; 201a: Notch; 201b: Metal box protrusion; 201b-1: Protrusion inclined surface; 201b-2: Protrusion straight surface; 202: Second connection terminal; 202a: Guide opening; 203: Fixing support; 204: Control unit; 205: Electric drive device; 206: Locking wedge plate; 207: Tension spring;
300: Wire harness; 310: Main connection line; 320: Secondary connection line; 321: Spring wire harness; 322: Straight wire harness; 323: First connection terminal; 323a: Alignment guide structure; 323b: Slot;
400: Operation unit; 401: Connection socket; 402: Power connection port; 403: Switch.

### DETAILED DESCRIPTION

### Embodiment 1

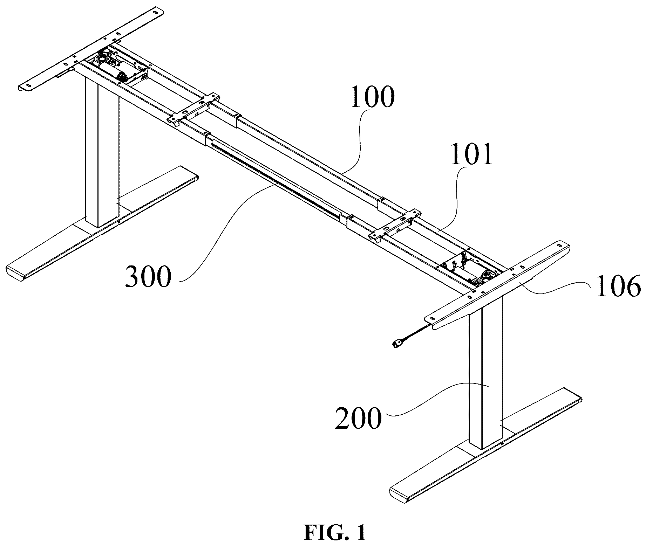

The present disclosure discloses an electric connection structure for an electric lifting desk frame. As shown in FIGS. 1 to 17, it comprises a frame 100 supporting a desk top, a plurality of lifting columns 200 connected to the frame 100 and internally provided with an electric drive device 205, and a control unit 204 for controlling the linear movement of the lifting columns 200. The control unit 204 is independently provided inside each of the lifting columns 200, and the lifting columns 200 are electrically connected via a wire harness 300. As shown in FIG. 1, the wire harness 300 is pre-installed and hidden inside the frame 100. In addition, the wire harness 300 is also externally connected to a power unit and an operation unit 400.

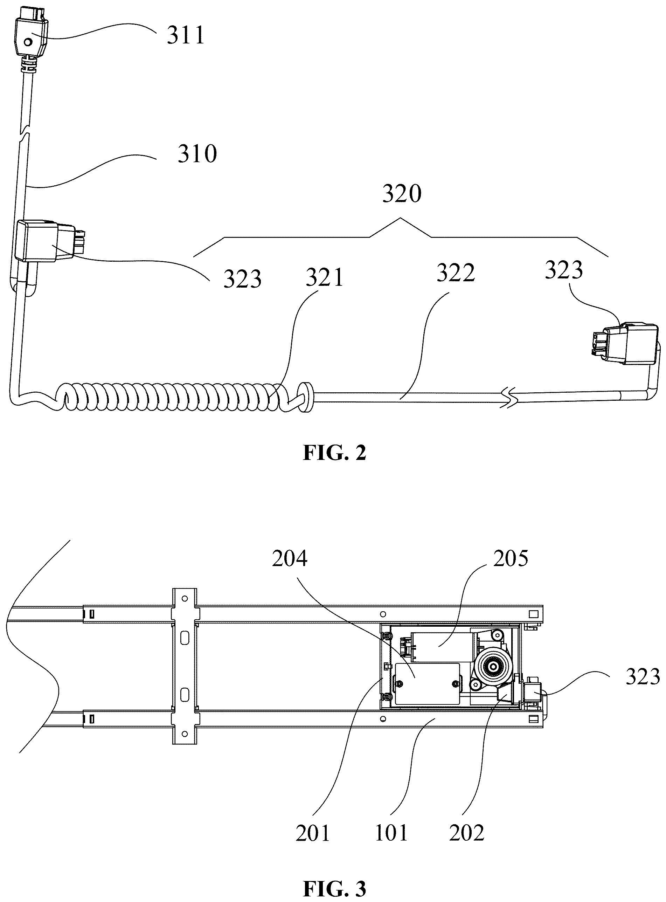

In the present disclosure, by pre-installing the wire harness inside the frame, the wire harness is prevented from being exposed, which improves the aesthetic appearance of the entire lifting desk. The profile of the frame can be a rectangular pipe, which fully encloses the wire harness, or it can be a U-shaped profile, which semi-encloses the wire harness. In order to achieve the purpose of hiding the wire harness, as shown in FIG. 2, the wire harness 300 comprises a main connection line 310 and a secondary connection line 320. The main connection line 310 and the secondary connection line 320 are connected via connection terminals, and a connection terminal 311 connected to the operation unit 400 is further provided at the other end of the main connection line 310.

In addition, as shown in FIG. 1, in order to adapt to different desk top sizes, the frame 100 is usually designed to be horizontally telescopic. Therefore, the pre-installed wire harness also needs to change accordingly. As shown in FIG. 2, the secondary connection line 320 comprises a straight wire harness 322, a telescopic spring wire harness 321 and a first connection terminal 323. The secondary connection line 320 is pre-installed inside the cross beam 101 of the frame 100. The main connection line 310 is installed inside the longitudinal beam 106 of the frame 100, and a retaining groove for installing the main connection line 310 is provided on the longitudinal beam 106. The main connection line 310 can be led out from the front side of the longitudinal beam 106, and at this time, the operation unit 400 is located on the right side of the lifting desk; if the main connection line 310 is led out from the rear side of the longitudinal beam 106, then the operation unit 400 is located on the left side of the lifting desk. The leading-out direction of the main connection line 310 can be changed according to different usage habits of users.

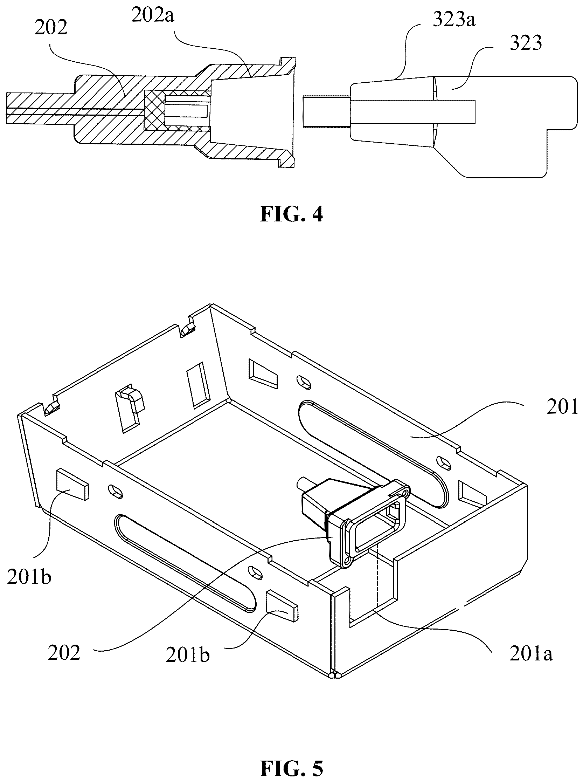

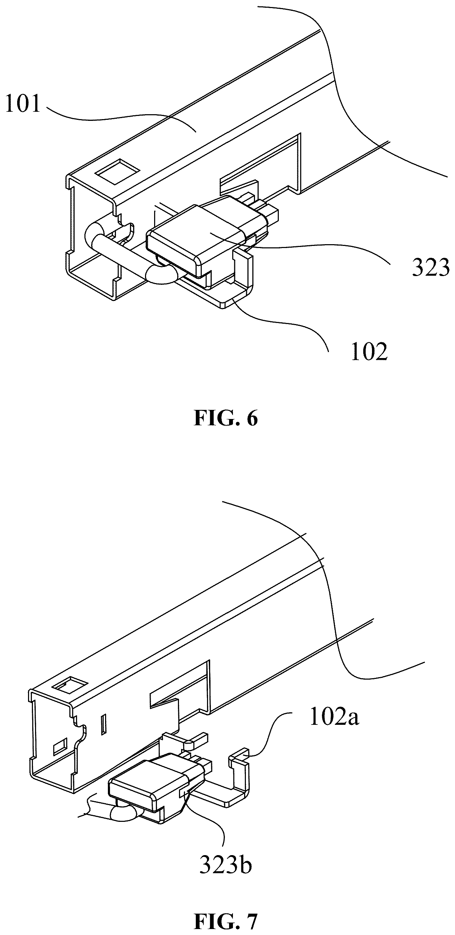

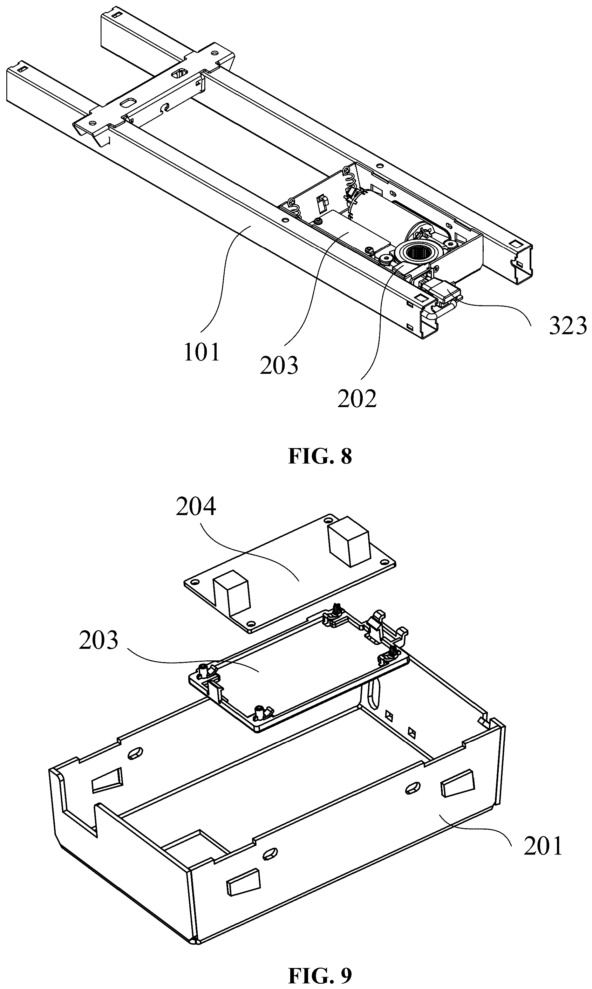

As shown in FIGS. 5 and 6, a second connection terminal 202 electrically connected to the control unit 204 is further fixedly provided on the metal box 201 of the lifting column 200, and a first connection terminal 323 adapted to the second connection terminal 202 is provided on the frame 100. As shown in FIGS. 3 and 8, when the lifting column 200 is installed into the frame 100, the first connection terminal 323 is simultaneously inserted into the second connection terminal 202 for electrical connection. The advantage of this design of the present disclosure is that: the electrical connection is carried out while the lifting column and the frame are mechanically installed, which improves the convenience of installation and at the same time reduces the safety risks caused by connection errors.

To ensure a better connection between the first connection terminal 323 and the second connection terminal 202, as shown in FIG. 4, the second connection terminal 202 is provided with a guide opening 202a, and the first connection terminal 323 is provided with an alignment guide structure 323a adapted to the guide opening 202a of the second connection terminal. When the lifting column 200 is connected to the frame 100, the guide opening 202a and the alignment guide structure 323a come into contact first. After guidance, the first connection terminal 323 and the second connection terminal 202 can achieve better electrical connection.

Regarding the above-mentioned design, as shown in FIG. 5, a notch 201a is provided on the metal box 201, and the second connection terminal 202 is snap-fitted in the notch 201a. As shown in FIG. 7, a fixing base 102 for fixing the first connection terminal 323 is provided at one end of the cross beam 101. The fixing base 102 is provided with a protruding portion 102a extending inwards along the direction of the cross beam 101, and a slot 323b adapted to the protruding portion 102a is provided on the first connection terminal 323.

As shown in FIGS. 8 and 9, inside the lifting column 200, a fixing support 203 is provided on the metal box 201. The control unit 204 is fixedly installed inside the metal box 201 through the fixing support 203, and the control unit 204 is electrically connected to the second connection terminal 202. In the present disclosure, the traditional integrated control box is divided into small parts and installed inside the lifting columns respectively. This design, along with the design of the first and second connection terminals, represents a systematic change. As a result, there is no control box under the lifting desk, which not only improves the aesthetic appearance of the lower part of the desk top but also enhances the integration of the lifting desk frame.

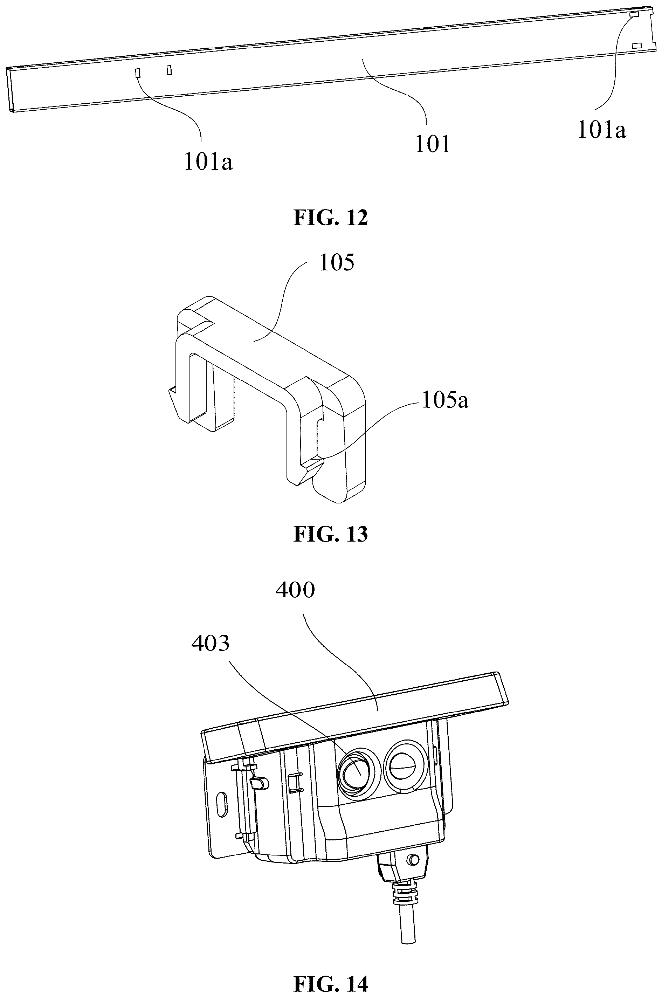

As shown in FIGS. 14 to 15, the operation unit 400 connected to the connection terminal 311 of the main connection line 310 is a hand-controller. The operation unit 400 is provided with a connection socket 401 for the main connection line and a power connection port 402. A switch 403 capable of cutting off its own power supply is provided at the bottom of the operation unit 400. When the lifting desk is not in use, the power supply can be cut off through the switch, realizing a low-power consumption design and achieving the purpose of energy conservation.

### Embodiment 2

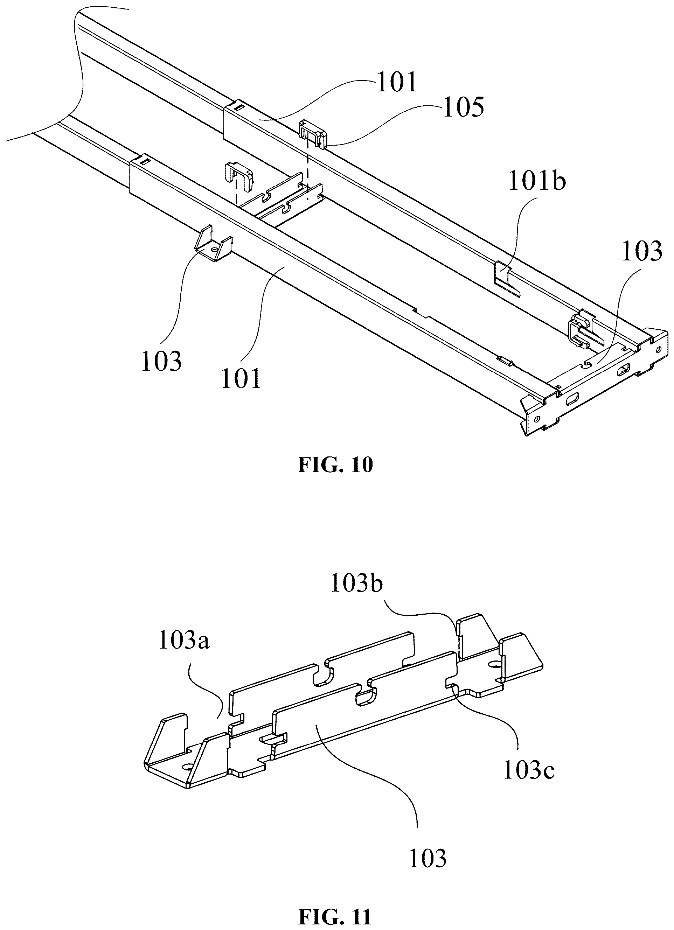

In order to better achieve the hiding of the wire harness and the rapid connection between the first connection terminal and the second connection terminal, as shown in FIGS. 10 to 13, the present disclosure provides a quickly assembled frame. The frame 100 comprises two cross beams 101 arranged in parallel, connecting members 103 snap-fitted between the two cross beams 101, and connecting members 103 snap-fitted at the ends of the two cross beams. The connecting members 103 detachably fix the two cross beams 101 together. With this assembled frame, the cross beams 101 can be snap-fitted together by two connecting members 103, and the installation process is very convenient. The assembled design not only achieves the purposes of hiding the wire harness and quickly making electrical connections in the present disclosure, but also reduces the packaging volume and lowers the transportation cost.

Preferably, the connecting member 103 is provided with a first snap-fit portion 103a adapted to the size of the cross beam 101. The connecting member 103 is also provided with a first undercut 103b, and the cross beam 101 is provided with a retaining groove 101a adapted to the first undercut 103b.

Preferably, in order to relax manufacturing precision requirements and improve the interchangeability of parts, the connecting member 103 is provided with a first snap-fit portion 103a larger than the size of the cross beam 101, and a locking insert 105 is provided between the first snap-fit portion 103a and the cross beam 101. More preferably, the locking insert 105 is provided with a second undercut 105a, and the connecting member 103 is provided with a snap-fit 103c adapted to the second undercut 105a. The locking insert 105 is a plastic part. During installation, the second undercut 105a can be inserted into the snap-fit by utilizing the inherent elasticity of the plastic part. The second undercut 105a can effectively prevent the locking insert 105 from falling off due to various swings during the use of the lifting desk.

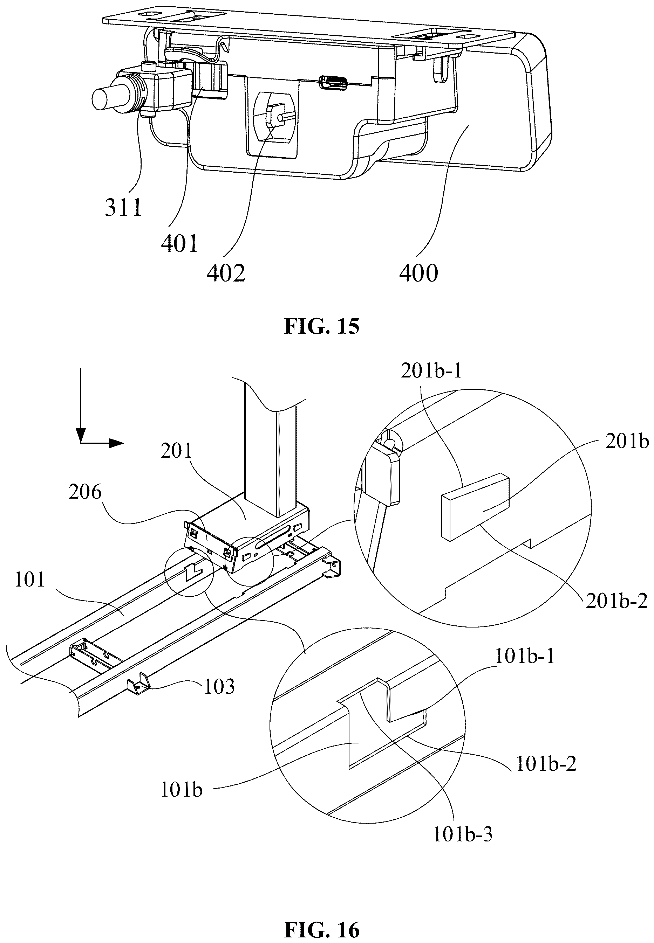

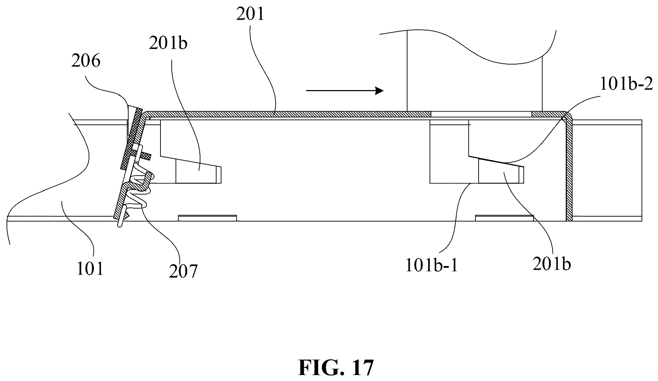

Installation process of the electric lifting desk using the preferred technical scheme of this embodiment:
1. As shown in FIG. 10, place two sets of cross beams 101 pre-installed with wire harnesses 300 in parallel. Assemble the cross beam 101 components using several connecting members 103 and locking inserts 105 to form a fixed frame 100.
2. As shown in FIG. 8 and FIG. 16, lay the assembled frame 100 components flat. Install the lifting columns 200 into the corresponding positions, that is, align the metal box protrusions 201b of the lifting columns 200 with the inclined slots 101b in the frame 100. Press the metal box 201 downwards by hand so that the metal box protrusions 201b completely enter the inclined slots 101b from the inclined-slot notches 101b-3, and the protrusion straight surfaces 201b-2 fit the inclined-slot straight surfaces 101b-2. Then, push the lifting columns 200 forward by hand so that the protrusion inclined surfaces 201b-1 fit the inclined-slot inclined surfaces 101b-1. At this time, the first connection terminals 323 and the second connection terminals 202 are automatically inserted for electrical connection.
3. As shown in FIG. 17, a lifting column locking device is also installed on the lifting column 200. Specifically, a locking wedge plate 206 is installed on the inclined surface outside the metal box 201 of the metal box 201 through a tension spring 207. When the lifting column 200 is installed into the frame 100, the locking wedge plate 206 tightens the lifting column 200 and the frame 100 under the action of the tension spring 207, thereby achieving the effect of locking the lifting column 200 and the frame 100. The technical scheme of using a crank wrench in Chinese Patent CN107981540A can also achieve the technical effect of locking the lifting column and the frame. However, as a preferred technical scheme of the present disclosure, the step of installing the crank wrench is eliminated. While pushing the lifting column 200 for installation, the tension spring 207 automatically tightens the locking wedge plate 206, making the installation simpler and more convenient.
4. Install the baseboard on the lifting columns 200 and install the longitudinal beams 106 on the cross beams 101.
5. Place the desk frame face up, install the desk top, and connect the operation unit 400, power supply, etc.

The specific embodiments described above further elaborate on the purpose, technical schemes, and beneficial effects of the present disclosure. It should be understood that the above-mentioned are only specific embodiments of the present disclosure and are not intended to limit the present disclosure. Any modifications, equivalent replacements, improvements, etc. made within the spirit and principle of the present disclosure shall be included in the protection scope of the present disclosure.

## Claims

1. An electric connection structure for an electric lifting desk frame, comprising a frame (100) supporting a desk top, a plurality of lifting columns (200) connected to the frame (100) and internally provided with an electric drive device (205), and a control unit (204) for controlling the actions of the lifting columns (200), wherein: the control unit (204) is independently provided inside each of the lifting columns (200); the lifting columns (200) are electrically connected via a wire harness (300); the wire harness (300) is installed in a concealed manner within the frame (100), and the wire harness (300) is connected to an operation unit (400) and/or a power unit;
a metal box (201) is provided on the lifting column (200), a second connection terminal (202) electrically connected to the control unit (204) is further fixedly provided on the metal box (201), a first connection terminal (323) adapted to the second connection terminal (202) is provided on the frame (100), and when the lifting column (200) is installed into the frame (100), the first connection terminal (323) is simultaneously electrically connected to the second connection terminal (202).

2. The electric connection structure for an electric lifting desk frame according to claim 1, wherein: the wire harness (300) comprises a main connection line (310) and a secondary connection line (320), and the main connection line (310) and the secondary connection line (320) are connected via a connecting member.

3. The electric connection structure for an electric lifting desk frame according to claim 2, wherein: the main connection line (310) is further provided with a connection terminal (311) connected to the operation unit (400).

4. The electric connection structure for an electric lifting desk frame according to claim 2, wherein: the frame (100) is a horizontally telescopic frame; the secondary connection line (320) is pre-installed inside the cross beam (101) of the frame (100); and the secondary connection line (320) comprises a straight wire harness (322), a telescopic spring wire harness (321) and a first connection terminal (323).

5. The electric connection structure for an electric lifting desk frame according to claim 2, wherein: the main connection line (310) is installed inside the longitudinal beam (106) of the frame (100), and a retaining groove for installing the main connection line (310) is provided on the longitudinal beam (106).

6. The electric connection structure for an electric lifting desk frame according to claim 1, wherein: the second connection terminal (202) is provided with a flared guide opening (202a), and the first connection terminal (323) is provided with an alignment guide structure (323a) adapted to the guide opening (202a) of the second connection terminal.

7. The electric connection structure for an electric lifting desk frame according to claim 1, wherein: a notch (201a) is provided at one end of the opening of the metal box (201), and the second connection terminal (202) is snap-fitted into the notch (201a).

8. The electric connection structure for an electric lifting desk frame according to claim 1, wherein: the frame (100) comprises two sets of cross beams (101), a fixing base (102) for fixing the first connection terminal (323) is provided on the inner side wall at one end of the cross beam (101); the fixing base (102) has an L-shaped structure, a slot opening is provided in the middle of the vertical wall of the fixing base (102), protruding portions (102a) are formed by extending inwards along the cross beam direction on both sides of the upper edge of the slot opening, and a slot (323b) adapted to the protruding portion (102a) is provided on the outer side wall of the first connection terminal (323).

9. The electric connection structure for an electric lifting desk frame according to claim 1, wherein: a fixing support (203) is provided on the metal box (201), the control unit (204) is fixedly installed inside the metal box (201) through the fixing support (203), and the control unit (204) is electrically connected to the second connection terminal (202).

10. The electric connection structure for an electric lifting desk frame according to claim 1, wherein: the frame (100) comprises two cross beams (101) arranged in parallel, a connecting member (103) snap-fitted between the two cross beams (101), and a connecting member (103) snap-fitted at the ends of the two cross beams; and the connecting member (103) detachably fixes the two cross beams together.

11. The electric connection structure for an electric lifting desk frame according to claim 10, wherein: a first snap-fit portion (103a) adapted to the size of the cross beam (101) is provided on the connecting member (103), a first undercut (103b) is further formed to protrude on the outer vertical wall of the first snap-fit portion (103a) of the connecting member (103), and a retaining groove (101a) adapted to the first undercut (103b) is provided on the outer side wall of the cross beam (101).

12. The electric connection structure for an electric lifting desk frame according to claim 11, wherein: the width of the first snap-fit portion (103a) is greater than the width of the cross beam (101), and a locking insert (105) is provided between the first snap-fit portion (103a) and the cross beam (101).

13. The electric connection structure for an electric lifting desk frame according to claim 12, wherein: the locking insert (105) is provided with a second undercut (105a), and a snap-fit (103c) adapted to the second undercut (105a) is provided on the connecting member (103).

14. The electric connection structure for an electric lifting desk frame according to claim 1, wherein: the operation unit (400) connected to the wire harness (300) is a hand - controller, and the operation unit (400) is provided with a connection socket (401) connected to the wire harness (300) and a power connection port (402).

15. The electric connection structure for an electric lifting support with a concealable wire harness according to claim 14, wherein: a switch (403) capable of cutting off the power supply of the operation unit (400) is provided at the bottom of the operation unit (400).

16. An electric lifting desk, wherein: comprises the electric connection structure for an electric lifting desk frame according to any one of claims 1 to 15.
